# EUROPEAN PATENT SPECIFICATION

(11) **EP 0 249 630 B1**
(45) Date of publication and mention of the grant of the patent: **24.02.1993**
(21) Application number: 87900481.0
(22) Date of filing: 03.12.1986
(51) Int. Cl.: B23D 25/12, B26D 3/08, B26D 1/56

(54) **APPARATUS FOR CONSTANT PRESSURE IN LINE-WEB CRUSH-SCORING**
VORRICHTUNG ZUR ERZEUGUNG KONSTANTEN ANDRUCKS IN EINER RILLVORRICHTUNG
APPAREIL D'APPLICATION D'UNE PRESSION CONSTANTE DANS UNE OPERATION D'ENTAILLAGE PAR ECRASEMENT D'UNE BANDE DE SUPPORT

(30) Priority: 04.12.1985 US 804817
(43) Date of publication of application: 23.12.1987
(73) Proprietor: AVERY DENNISON CORPORATION, Pasadena California 91103 (US)
(72) Inventor: SLOBODKIN, Yefim, Lyndhurst, OH 44124 (US)
(74) Representative: Eisenführ, Speiser & Partner
(86) International application number: PCT/US86/02623
(87) International publication number: WO 87/03520

(56) References cited:
- WO-A-87/01652
- DE-R-WE NT PUB
- US-A- 1 704 186
- US-A- 2 292 723
- US-A- 3 147 656
- US-A- 3 348 477
- US-A- 3 826 165
- US-A- 3 900 645
- US-A- 4 257 298

## Description

The present invention is directed to an apparatus for applying constant pressure in mechanical diagonal-web crush-scoring and, more particularly, to an apparatus for diagonal crush-scoring a web to be used as the release liner or backing for labels, stickers, tapes, or similar articles bearing a pressure-sensitive adhesive.

### Background of the Invention

Adhesive products such as labels, stickers, tapes, and similar articles, are normally comprised of a surface sheet or facestock, a layer of adhesive, normally pressure-sensitive, secured to the back face of such surface sheet, and a removable paper backing sheet or release liner secured to the adhesive layer by a low surface-energy bond, such as a silicon coating, for ultimate removal when the label, sticker, or the like, is to be affixed to an article or substrate for end-use purposes. The backing sheet can be difficult to remove because no edge is usually exposed to facilitate grasping the backing sheet for its removal.

One approach to overcoming the difficulties encountered in removing backing sheets, is to crush-score the backing sheet before it is secured to the layer of adhesive and before it is silicone-released-coated. Crush-scoring leaves a line in the backing sheet that has been weakened by a compaction of the fibres in the sheet. When a label, sticker or the like is to be affixed, it can be flexed to cause the backing sheet to split or tear along the score line, creating a pair of exposed edges for grasping the backing sheet. The final dimensions of the labels, stickers or the like to be produced, often makes it advantageous to arrange the score lines in a diagonal pattern on the backing sheet, to maximize the length of score line available on the back of the product for creating exposed edges.

U.S.-A 3,900,645 discloses an apparatus and a method for scoring paper by means of a pair of cylindrical rolls in operative association to form a roll bight therebetween. One of the rolls has one or more metal wires secured to the surface thereof. The thickness of the wires is dependent upon the thickness of the sheets being processed and the desired amount of scoring to be provided thereon.

The amount of weakening that takes place during crush-scoring, however, must be carefully controlled to prevent splitting or tearing of the backing sheet while it is being processed or prepared for use, and to avoid producing labels, stickers or the like where splitting or tearing prematurely occurs or does not occur upon flexing.

Forming diagonal scores across a web of paper for release-liner use has been determined, with proper spacing of scores, to enable labels of any size to be cut from the web, with high statistical assurance that it will contain at least one edge-to-edge score to insure a crack-and-peel feature, i.e., the ability to form a crack at any score line and peel the backing across any other score line present.

The present invention is directed to a system for uniform diagonal crush-scoring at a constant and controllable pressure, to achieve a product of the highest quality.

### Summary of the Invention

According to the present invention, there is provided an apparatus according to claim 1 for crush-scoring paper, particularly paper used as the release liner in label construction, in which a floating force for scoring is maintained substantially constant and unbiased, and is applied to the surface undergoing crush-scoring, under essentially friction-free conditions and a method according to claim 15.

The heart of the system is a support providing a pair of guide rods, preferably cylindrical rods set in substantially frictionless bearings, which extend outwardly from the support means and are coupled to a mounting bracket which contains, for present purposes, a cylindrical anvil roller, used to crush-score paper.

Between the circular guides, is a plunger which extends from the mounting bracket to a sealed flexible diaphragm, which is in communication with a pressurized fluid, preferably gaseous, and which provides the force to be transmitted through the rod to the mounting bracket.

In the preferred assembly, the plunger is not secured to the mounting bracket nor the diaphragm, and the cooperation among the mounting bracket, the plunger, and the diaphragm, does not involve the use of frictional measures and is bond-free. This, coupled with the use of essentially frictionless mounts and guides, insures that the mounting bracket will float, and that the force applied to the mounting bracket, and therefore to the anvil rollers, will be essentially unidirectional and controlled by the amount of fluid pressure applied to the diaphragm.

In the system for crush-scoring paper, a plurality of anvil rollers contained on a corresponding plurality of mounting brackets on a plurality of adjacent supports, are positioned in staggered, overlapping relation along a support rod. Each is readily removable as wear or damage dictates. Preferably, the cylindrical anvil rollers are pivotably adjustable to insure positioning parallel to the crushing cylinder. Paper is passed between the anvil rollers and a wire-wound crushing cylinder. The wires are removably embedded in grooves extending diagonally across the surface of the cylinder from edge to edge. Preterably, they are spring-tensioned to account for thermal expansion and contraction. They are precision-ground to insure uniform extension from the surface of the cylinder.

In the process of scoring, paper from a roll is passed between the crushing cylinder and a plurality of anvil rollers, with pressure applied against each being tailored to achieve the depth of score desired for appropriate cracking and peel performance of the paper. Backlighting enables inspection of fluctuations in depth of the score, and adjustment of the applied pressure accordingly.

By use of the apparatus of the instant invention, higher-quality scores than ever previously achieved, may be realized for uniform performance of the products in the hands of the consumer.

### Brief Description of the Drawings

These and other features and advantages of the present invention, will be better understood by reference to the following detailed description, when considered in conjunction with the accompanying drawings, wherein
FIG. 1 shows a schematic, sectional side view of an apparatus for applying to an anvil roller, constant pressure in crush-scoring according to the present invention;
FIG. 1A at section A-A shows in greater detail the means by which the apparatus of FIG. 1 is secured to a mounting bracket;
FIG. 1B shows a sectional side view of an alternate means for securing the apparatus of FIG. 1 to a mounting bracket;
FIG. 1C shows a back view of the alternate means of FIG. 1B;
FIG. 1D shows a sectional front view of the alternate means of FIG. 1B;
FIG. 2 shows a schematic top view of the apparatus of FIG. 1;
FIG. 2A shows a sectional side view of a wire end-clamp that is part of the crushing cylinder of FIG. 1;
FIG. 2B shows a schematic, detailed top view of a support cabinet that is part of the apparatus of FIG. 1;
FIG. 3 shows an idealized side view of a product with a crush-scored backing sheet;
FIG. 4 shows a sectional, magnified side view of the product of FIG. 3, flexed to cause cracking at the crush-score; and
FIG. 5 shows a schematic side view of an alternate embodiment of an apparatus for applying constant pressure in crush-scoring in accordance, with the instant invention.

### Detailed Description

The present invention pertains to an apparatus for crush-scoring paper, in which a plurality of cylindrical anvil rollers are independently supported in a substantially frictionless manner, for selectively applying an unbiased constant pressure to diagonal wires of a wire-wound cylinder, to enable diagonal crushing of paper at uniform loads across the cylinder. The following is a description of a preferred embodiment of the invention as shown in the drawings.

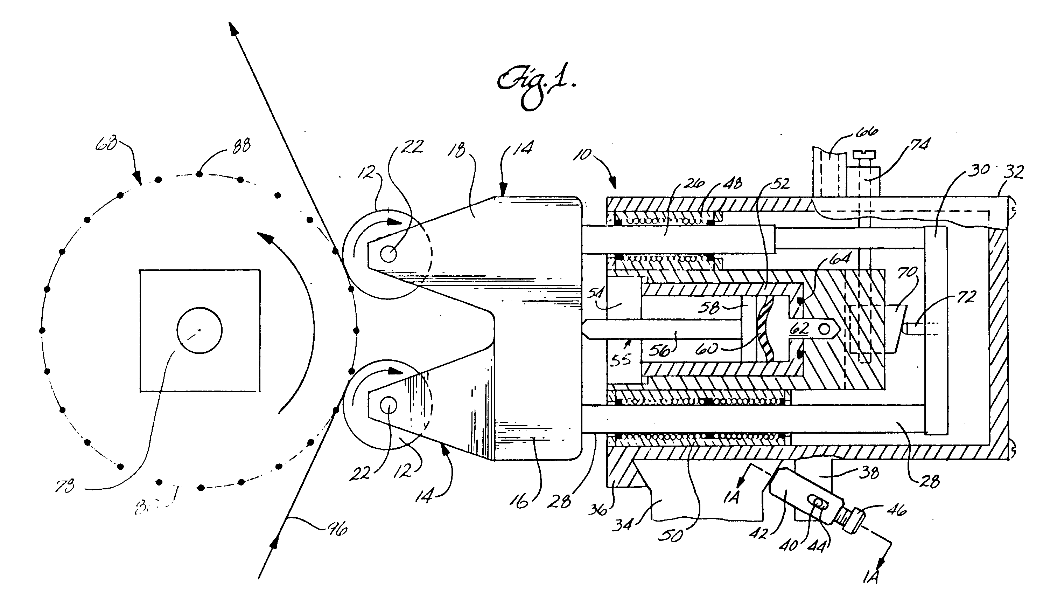

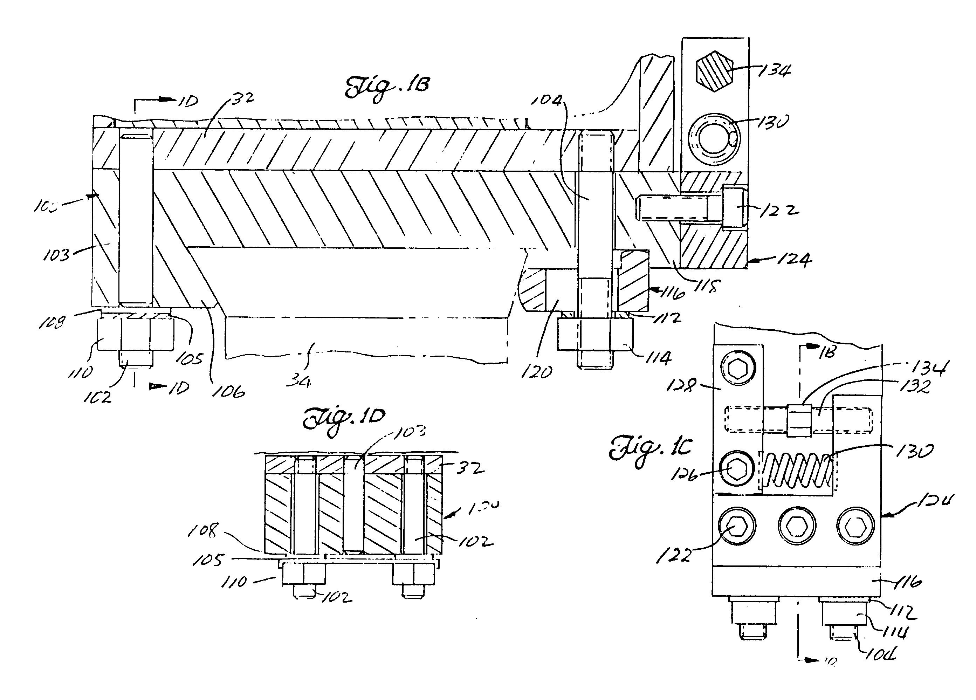

With reference to FIGS. 1, 1A, 2, 2A, and 2B, each anvil roller holder 10 has cylindrical anvil roller 12 rotatably supported by mounting bracket 14. Mounting bracket 14 is of unitary construction, preferably one piece comprised of end member 16, from which a pair of panel members 18 and 20 extend outwardly, parallel to one another. A cylindrical pin 22 extends between side panels 18 and 20 at a point remote from the back spacer bar 16. Pin 22 extends through a corresponding hole in the center of anvil roller 12. The anvil roller freely rotates about pin 22, preferably by means of ball or roller bearings.

Anvil roller 12 should be as perfectly cylindrical as possible.

Extending outward from the surface of end member 16, opposite anvil roller 12, is a pair of smooth guide rods 26 and 28, which are preferably cylindrical, as shown. The guides extend, parallel to one another, outward from opposite ends of spacer bar 16. The opposed or remote ends of guide rods 26 and 28 are joined to one another by connecting brace 30 extending between them.

The cylindrical guides over most of their length, and the connecting brace, are enclosed in a support cabinet 32. The underside of cabinet 32 is adapted to be attached to mounting pedestal 34 for installation of the anvil roller holder at a work site. To accomplish this, the edge of the underside of cabinet 32 nearest the anvil roller, has a wedged lip 36 extending downward, which dovetails with the top of pedestal 34. With additional reference to FIG. 1A also extending downward from the underside of cabinet 32, remote from lip 36 so that it will be on the opposite side of pedestal 34 from lip 36, is a screw mount 38. At the free end of screw mount 38, a pair of cylindrical pins 40 extend outward from opposite sides of screw mount 38 to hold lockpiece 42 in place by extending through elongated apertures 44 on opposite sides of lockpiece 42. Lockpiece 42 is U-shaped, with the opposing sides being on either side of the screw mount and the bottom member facing the pedestal. Screw 46 extends through the screw mount so that it comes in contact with the bottom member of lockpiece 42. Lockpiece 42 is tightened against the other slanted surface of pedestal 34, by tightening screw 46, to hold the anvil roller holder in place. Elongated apertures 44 in the opposing sides of lockpiece 42, determine the amount of play available for tightening.

With reference to FIGS. 1B, 1C and 1D, there is depicted an alternate means for attaching the underside of cabinet 32 to mounting pedestal 34 for installation of the anvil roller holder at a work site. This alternate embodiment is preferred to ensure parallelism between the surface of the anvil rollers and the surface on which they will be acting, and is particularly preferred if precision parts are not used in the attachment means, to save expense.

In this embodiment, an attachment bracket 100 is positioned between the underside of cabinet 32 and the top surface of pedestal 34, by two pairs of bolts 102 and 104, and a pin 103. Pin 103 extends upward through corresponding cylindrical holes in bracket 100 and the underside of cabinet 32, located at the center of the edge nearest the anvil roller. Bracket 100 has a wedged lip 106 extending downward at this edge which dovetails with the top of pedestal 34. Pin 103 is retained in place by lock plate 105 extending across the underside of bracket 100 and covering the cylindrical hole for pin 103, which extends through bracket 100 into cabinet 32. Plate 105 is in turn held in place by bolts 102 extending up through the plate and oversized cylindrical holes in bracket 100 located on either side of pin 103 and secured to the underside of cabinet 32. Spring washers 108 are positioned on bolts 102 between the underside of bracket 100 and plate 105. Nuts 110 can be tightened down from the free end of bolts 102, to hold plate 105 in place and to hold this edge of the attachment bracket against the underside of cabinet 32.

Pin 103 provides a pivot point about which cabinet 32 can rotate with respect to attachment bracket 100. The oversized cylindrical holes in bracket 100 surrounding bolts 102, allow room for the bolts to move in the holes when cabinet 32 is pivoted. Spring washers 108 transmit the torque from the tightening of nuts 110 to the underside of bracket 100 and create the friction which must be overcome in order for cabinet 32 to pivot. This friction holds bracket 100 and cabinet 32 together and allows pivoting at the same time. The ends of plate 105 may be turned down after nuts 110 are tightened into place, to prevent the nuts from loosening.

Bolts 104 are aligned on the opposite side of pedestal 34 from bolts 102 and extend upward through oversized cylindrical holes in attachment bracket 100 and are secured to the underside of cabinet 32. Washers 112 and nuts 114 can be tightened down from the free end of bolts 104. However, mounted on bolts 104, between the underside of the attachment bracket and washers 112 and nuts 114, is an adjustable wedge 116 with an el-shaped cross-section. When tightened into place, one end of the el will rest against the other slanted surface of pedestal 34, while the other end rests against the underside of the attachment bracket. A lip 118, extending downward from the underside of the attachment bracket at the edge furthest from the anvil rollers, acts to hold adjustable wedge 116 against the pedestal.

Bolts 104 extend through adjustable wedge 116 at elongated apertures 120. These elongated apertures have a width which fits the diameter of bolts 104, but a length which allows the bolts to be positioned at various distances from the pedestal. In this way the adjustable wedge can adapt to the adjustments necessary to establish parallelism. In addition, the cylindrical holes in bracket 100 surrounding bolts 104, are oversized to allow room for bolts 104 to move when cabinet 32 is pivoted.

Attached by three bolts 122 to the side surface of the attachment bracket facing away from the anvil rollers, is adjustment bracket 124. Bracket 124 is el-shaped, with one leg of the el having bolts 122 extending through it to secure it to bracket 100, and the other leg extending upward adjacent one edge of the back surface of cabinet 32. Attachment bracket 100 is spaced from the rear surface of cabinet 32, providing a small clearance between adjustment bracket 124 and the rear surface of cabinet 32.

Attached to the back surface of cabinet 32 by a pair of bolts 126, is adjustment brace 128. Adjustment brace 128 is positioned along an edge of the rear surface of cabinet 32 above the leg of bracket 124, and is secured by bolts 122 to cabinet 32 and opposite the other leg of bracket 124. Extending between the opposed surfaces of bracket 124 and brace 128, are backlash coil spring 130 and a differential screw adjustor 132. Screw adjustor 132 is differentially threaded into each surface and centrally incorporates an integral nut 134 having a hexagonal cross-section to provide a one-piece differential screw adjustor that can be turned with a wrench.

Turning the screw adjustor one way or the other, will result in brace 128 and bracket 124 moving either closer to one another or further from one another, thereby pivoting cabinet 32 and changing the position to be assumed by the anvil roller when adjustable wedge 116 is tightened against bar 34. This allows an operator to adjust the position of the anvil roller until it is parallel to the surface to be acted upon. To this end, generally one rotation of adjustor 132 can result in a movement of brace 128 relative to bracket 124 in the order of about one-thousandth of an inch.

Guides 26 and 28 are supported in cabinet 32, only by sets of low-friction bearings 48 and 50, preferably linear ball bearings. In the presently preferred embodiment, the low-friction bearings are Thompson ball bearings, but it should be understood that any bearing providing substantially frictionless support, may be used. Bearings 48 and 50 allow in-and-out longitudinal movements of the cylindrical guides, into support cabinet 32, substantially without friction.

To provide controlled pressure to anvil roller 12, pneumatic cylinder 52 is provided within the cabinet. The central, longitudinal axis of the pneumatic cylinder is substantially parallel to guides 26 and 28, and intersects the center of bar member 16. The end of the cylinder closest anvil roller 12, is capped with cylinder head 54. Plunger 55 is loosely and frictionlessly fitted inside cylinder 52, and has a head 58, which extends across its cross-section. Rod 56 frictionlessly extends out from one surface of head 58 along the central, longitudinal axis of the cylinder through cylinder head 54, until it contacts the mounting bracket comprising bar member 16. Where the rod passes through cylinder head 54, sufficient clearance is provided to make the fit relatively loose. The loose fit of the rod and head enables the two to move within the cylinder with little, or essentially no, friction, with rods 26 and 28 being relied on to insure proper anvil roller positioning.

On the other side of plunger 55, opposite rod 56, flexible diaphragm 60 extends across the inside cross-section of the pneumatic cylinder. In the end of the cylinder, opposite cylinder head 54, is inlet 62, through which a compressed gas, or its equivalent, can be fed to the portion of the pneumatic cylinder on the side of the diaphragm opposite the plunger. When the compressed gas is fed to the cylinder, it will deflect the diaphragm, communicating the gas pressure to the point where the anvil roller contacts the material being crush-scored, through the head, rod and mounting bracket. The use of the diaphragm allows the plunger to be loosely fitted without the friction-creating gaskets that would be necessary if the plunger had to have an airtight seal with the wall of the cylinder. Gasket 64, between the outer surface of the end wall of the cylinder and the cabinet portion supporting the cylinder, prevents compressed gas from leaking around the cylinder.

Compressed gas is fed to inlet 62 through connecting conduit 66, which extends out of cabinet 32 to a source of pressure-regulated compressed gas. The pathway of conduit 66 through cabinet 32, is shown in FIGS. 1 and 2B, in combination. Pressure should be available to deliver a force to the anvil-roller, at the point of contact, sufficient to enable crush-scoring. A force up to about 50 pounds (about 200 N) may be used. Because of gas compressibility this force remains constant because, even if there are irregularities in the diameter of the anvil roller or the thickness of the web being crush-scored, the anvil roller will be able to float with the irregularities, due to the substantially frictionless support. The use of a compressed gas as a pressure source, is preferred over a relatively incompressible hydraulic fluid, so that the anvil roller is best able to float without a significant pressure change.

While it is advantageous to minimize the friction present when the anvil roller moves, it is also desirable to provide a zero point for the anvil roller, to prevent it from coming into premature or undesired contact with the wires of wire-wound crushing cylinder 68, used to support the web to be crush-scored, opposite the anvil rollers. Such contact could damage the wires of the crushing cylinder and/or the anvil rollers. A zero point is provided by screw-adjusted wedge 70. Screw-adjusted wedge 70 has a slanted or inclined surface which presses against set pin 72, extending outward from the surface of connecting brace 30. In combination with adjustment of differential screw 74, the slanted surface of wedge 70 can be moved across set pin 72, to arrive at a zero point from which anvil roller 12 extends to diaphragm 60, on application of pressure. The zero point is determined by turning differential screw 74, which in turn induces travel to the wedge, which is threaded to the screw and is driven thereby. As indicated, changing the position of the wedge, changes on its slanted surface the point at which set pin 72 will contact. Differential screw 74 extends out of cabinet 32 for easy access. A segment of guide 26 has a narrower diameter to allow room for conduit 66 and screw 74. FIG. 2B shows the zero-point-adjustment feature as seen from above.

FIGS. 1 and 2 also show the cooperation between anvil roller holder 10 and wire-wound crushing cylinder 68 with a paper backing sheet 96 being crush-scored. The wire-wound crushing cylinder is cylindrical, and freely rotates about the axis determined by precision bearings 78. A single cylinder is normally used in conjunction with a number of anvil rollers, positioned in a staggered line by their holders, side by side and in overlapping roller arrangement.

Adjacent anvil rollers are alternately positioned above and below one another, so that the paths they roll out on the paper to be crush-scored, can overlap. It is presently preferred that the extent of this overlap be from about 0,12 to 0,25 mm (0.005 to 0.01 inch). While the adjacent anvil rollers are staggered to allow overlap, they are preferably positioned relatively close to one another so that the force transmitted from rod 56 is transmitted to the material to be crush-scored, in as straight a line as possible. By staggering the anvil rollers as little as possible, so long as they do not interfere with one another, each anvil roller can be positioned as close as possible to intersecting the longitudinal axis of rod 56.

With reference to FIGS. 2 and 2A, the crushing cylinder is diagonally wound with a set of smooth cylindrical wires 88. The wires should be as perfectly round as possible, and their surfaces should be as smooth as possible. In addition, the diameter of the wires should remain constant throughout their length. The presently preferred diameter for the wires is from about 0,5 to about 1 mm (0.02 to about 0.04 inch).

Wires 88 are held taut on the crushing cylinder by screw clamps 90. Each end of a wire is held by a pair of corresponding clamps 90, attached to opposite ends of crushing cylinder 68. Each clamp is screw-adjustable, as shown in FIG. 2A, so that the wires can be held taut. A locking screw 92 meets each clamp at right angles to lock the clamp in position once a wire has been tightened. In addition, a spring 94 is provided for each clamp, with one end being connected to the end surface of the crushing cylinder adjacent the clamp on the side opposite the edge of the crushing cylinder, and the other end being looped over the end of a wire just before it is connected to the spring's corresponding clamp. Springs 94 provide a spring loading to the ends of the wires, helping to keep them taut, and compensating for expansion of the wires when the ambient temperature changes.

The wires are held in place on the surface of crushing cylinder 68 by rounded grooves extending diagonally along its surface. The grooves preferably have a depth slightly greater than the radius of wires 80. The grooves may be arranged along the surface of crushing cylinder 68 at any pattern including, but not limited to, the depicted 45-degree angle with respect to its longitudinal axis, as shown in FIG. 2. The grooves are spaced with respect to one another in any desired pattern as depicted in FIG. 1. Depicted from an axial cross-section, a prospective groove is positioned every 15 degrees about the surface of the crushing cylinder.

Although the paths of adjacent anvil rollers overlap, the length of the anvil rollers are dimensioned, with respect to the distance between wires 88, so that only one anvil roller is acting against a single strand of wire, underneath the web to be crush-scored at any given time. This mode of operation is preferred so the load from one anvil roller is transferred to a single wire to maintain a constant pressure.

In this embodiment, a roller is prevented from acting on two wires at once. In consequence, an irregularity in one of the wires, such as increased diameter, will not result in reduced pressure on the adjacent wire and a score mark that is too shallow.

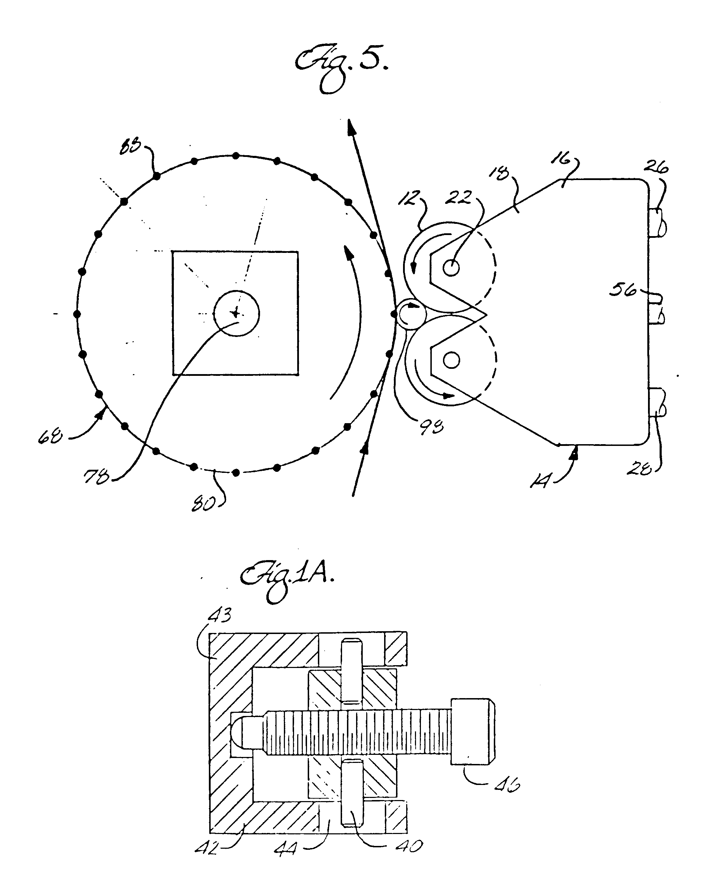

Nonetheless, FIG. 5 shows an alternate functional embodiment of the present invention. In this embodiment, a single small dowel 98 acts at one time, against the full length of the crushing cylinder and all the wires. Dowel 98 is held in place by a number of adjacent anvil roller holders. Mounting bracket 14 is arranged to hold two anvil rollers 12 one on top of the other. Anvil rollers 12 combine to hold dowel 98 in place against the crushing cylinder. As indicated, this embodiment is not as preferred as that wherein an anvil roller acts on a single strand of wire at a time, but it is preferred over having one long anvil roller act on all the wires, because the dowel has some give to it so that it can react to irregularities in individual wires, and the dual anvil rollers provide individual sources of force that can react individually to such irregularities. Dowel 98 should be flexible enough to transfer the load from anvil rollers to all wires on the roll.

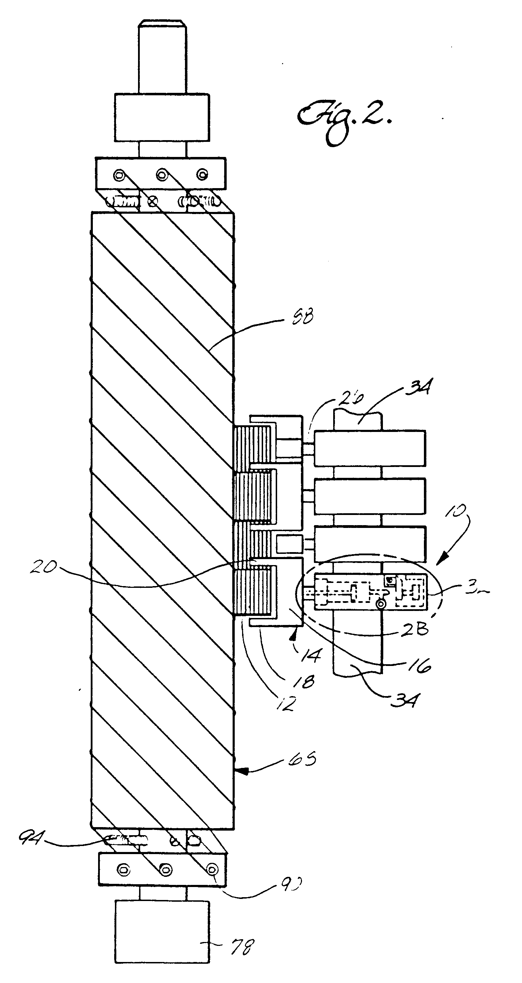

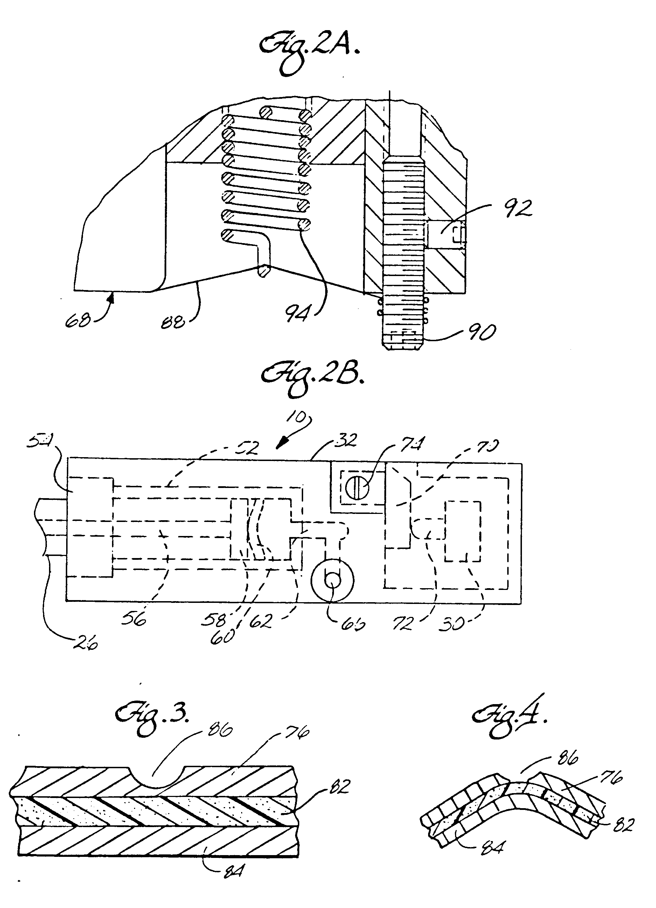

With reference to FIG. 3, paper stock for release liner 76, has been secured to adhesive layer 82, which in turn is secured to surface sheet 84. A score mark 86 is shown in side view. If the thickness of backing sheet 76 is from about 0,076 to about 0,2 mm (0.003 to about 0.008 inch), this amount of compaction allows the backing sheet to split or tear when flexed, as shown in FIG. 4, but is sufficiently sturdy to withstand peel-across at score lines.

The principal objective in the use of the apparatus of the instant invention, is to keep it operative under essentially frictionless conditions with only a unilateral force being applied through the fluid pressure against the diaphragm, such that the anvil rollers will float with fluctuations in paper thickness. The use of gaseous pressure is preferred, as compressibility of the gas allows for movement of the anvil rollers to and from cabinet 32 without any significant changes in applied pressure. However, to minimize any fluctuations, the diameters of the anvil roller, the crushing cylinder, and the wire, are controlled to as close a tolerance as possible. While cylindrical guide rods are currently used, they may be of any cross-sectional configuration, so long as there are available for them, bearings to enable essentially frictionless movement in and out of cabinet 32.

Similarly, since rod 56 may also be of any cross-sectional configuration, as it is essentially mounted in cooperation with head 58 and diaphragm 60 in a frictionless manner. With reference to FIGS. 1 and 2, the web of material (paper) to be scored 96 is passed between anvil roller 12 and the wires 88 of crushing cylinder 68. Any number of anvil roller assemblies may be mounted on support 34 in a parallel array. The amount of pressure applied to diaphragm 60 of each assembly, determines the compressive force to be applied to crush-score paper 96. With the aid of backlighting, an operator can view from above, the direction of paper travel, and can ascertain if the depth of the diagonal score is uniform, If not, the operator, by adjusting the pressure associated with any given anvil roller, can insure that the diagonal crush-score will be uniform throughout the width of the web. This insures, when the paper is coated with a release material such as a silicone release coating after scoring and then laminated to an adhesive and a facestock, that there will be at all times, uniform performance in the crack-and-peel operation of the construction.

To this end, it is desired that the paper be scored before applying a low-energy release surface on the opposed side thereof, for, if earlier applied, the pressure applied during the scoring operation could crack the release coating and provide a product of inferior quality.

The preceding description has been presented with reference to a presently preferred embodiment of the invention shown in the accompanying drawings. Workers skilled in the art and technology to which this invention pertains, will appreciate that alterations and changes in the described apparatus and structure can be practiced without meaningfully departing from the principles, spirit and scope of this invention. Accordingly, the foregoing description should not be read as pertaining only to the precise structures and techniques described, but rather should be read consistent with, and as support for, the following claims.

## Claims

1. An apparatus for crush-scoring a web of paper, which apparatus comprises a rotatable crush-scoring cylinder (68), having an axis and providing one or more protrusions (88) extending from the surface (80) thereof and across the crush-scoring cylinder at an angle diagonal to the axis of the crush-scoring cylinder, and means to apply a force to a web of paper (96) passed between said means and the crush-scoring cylinder to diagonally crush score the web of paper, whereby the apparatus comprises as the means to apply a crush score force to the web of paper, a plurality of rotatable cylindrical anvil roller assemblies (10) adjacently positioned across the width of said crush-scoring cylinder,
each anvil roller independently adapted to apply a preselected constant crush-scoring force against a web of paper passing over a protrusion extending from the surface of the crush-scoring cylinder (68) and to essentially contact no more than one protrusion at any time,
the crush-scoring cylinder, through rotation and cooperation of rotating anvil rollers (12) and the protrusions, causing a substantially constant force to be applied to the web of paper across the width of the crush-scoring cylinder such that each crush score formed will be of substantially constant depth.

2. Apparatus as claimed in claim 1 in which each of a plurality of adjacently positioned cylindrical anvil roller assemblies extending across the crush-scoring cylinder, provide an anvil roller (12) independently adapted to apply a preselected constant crush-scoring force in the direction of a web of paper passing over the crush-scoring cylinder, said cylindrical anvil rollers roller contacts no more than one protrusion (88) extending from the crush-scoring cylinder (68) at any time, said cylindrical anvil rollers (12) cooperating with the protrusions (88) extending from the crush-scoring cylinder to diagonally crush-score a web of paper to form scores of substantially constant depth when the web of paper is passed between a rotating crush-scoring cylinder and a plurality of rotating cylindrical anvil rollers.

3. Apparatus as claimed in claim 1 or 2 in which the plurality of adjacently positioned anvil roller assemblies mounted in side-by-side overlapping relation relative to each other said crush-scoring cylinder.

4. Apparatus as claimed in any one of claims 1 to 3 in which the cylindrical anvil rollers are arranged in staggered adjacent overlapping relationship.

5. Apparatus as claimed in any of claims 1 to 4 in which each crush-scoring means comprises:
(a) a cylindrical anvil roller (12) ;
(b) a mounting bracket (18) receiving at one end said cylindrical anvil roller in rotatable relation to said mounting bracket;
(c) a pair of guide rods (26 and 28) attached to the opposed end of said mounting bracket (18), said guide rods being parallel to one another and extending, in substantially the same direction, into a support housing (32) containing a corresponding pair of substantially frictionless bearings (48 and 50) for receiving the pair of guide rods, to enable the guide rods to move into and from the support substantially without friction; and
(d) a substantially frictionless plunger means (56) positioned between the guide rods and extending between the mounting bracket and means contained by the support housing for applying a predetermined unbiased force to the mounting bracket through the substantially frictionless plunger means (55) for application through the anvil roller to a web of paper undergoing crush-scoring by said crush-scoring cylinder; and
(e) means (36) for securing said apparatus to a support (34) associated with a crush-scoring cylinder for inducing a crush-score to said web of paper on application of a force from said anvil roller to a web of paper when passed between said anvil roller and said crush-scoring cylinder.

6. Apparatus as claimed in claim 5 in which apparatus comprises:
a plunger (58) positioned between the guide rods and extending between the mounting bracket and a flexible diaphragm (60) contained in the support housing, said diaphragm defining in the crush-scoring cylinder a first chamber for receiving the plunger, and a second chamber (62), for receiving pressure; and
means to introduce a gaseous pressure to the second chamber to induce a force against the diaphragm, for application to the plunger and in turn to the mounting bracket;

7. An apparatus as claimed in claims 5 or 6 in which the substantially frictionless bearings are linear ball bearings.

8. Apparatus as claimed in any one of the claims 1 to 7 in which the cylindrical anvil roller of each sequentially adjacent anvil roller assembly being alternately positioned above and below a plane formed by the axis of the crush-scoring cylinder and the center of the plungers of the anvil roller assemblies; and means adapted to be positioned between the crush-scoring cylinder and a web of paper to be crush-scored, and said serial anvil roller assemblies, and to induce a crushing force to the protrusions of the crush-scoring cylinder upon application of a unidirectional force to the plurality of cylindrical anvil roller assemblies.

9. Apparatus far crush-scoring a web of paper, as claimed in any one of claims 1 to 8 in which the crush-scoring cylinder (80) is mounted on a pair of roller bearings (78) forming a cylindrical axis and providing a plurality of half-circular grooves of uniform depth extending across the crush-scoring cylinder at an angle diagonal to the axis of the crush-scoring cylinder, each groove containing a circular wire (88) of substantially uniform diameter extending from the grooves to provide the protrusion uniformly extending from the surface of the crush-scoring cylinder.

10. Apparatus as claimed in any one of claims 5 to 8 in which said support housing (36) is coupled to said means For securing said apparatus to a support by means adapted to allow adjustment of parallelism of said anvil roller to said crush-scoring means.

11. Apparatus as claimed in any one of claims 5 to 10 which includes means to adjust the position of each of the cylindrical anvil roller relative to the crush-scoring cylinder in the absence of applied gaseous pressure.

12. Apparatus as claimed in claim 11 in which the means to adjust the position of each cylindrical anvil roller comprises:
(a) a bar (30) positioned between the guide rods;
(b) a block (70) having an inclined surface that is selectively movable along said bar;
(c) means (74) to selectively position said block along said bar; and
(d) pin (72) means coupled to said support and engaged in the inclined surface of said bar, the position of the cylindrical anvil roller relative to the crush-scoring cylinder being determined by the relative position of said pin means along the inclined surface of said bar.

13. Apparatus as claimed in claim 9 in which each wire (88) is under spring tension.

14. Apparatus as claimed in any one of the previous claims in which the protrusions (88) are at a 45-degree angle to the axis of the crush-scoring cylinder (68).

15. A method for crush-scoring a web of paper (96) comprising the steps of passing one side of a web of paper to be crush-scored in contact with the outer surface of a crush-scoring cylinder (68) having one or more diagonal crush-scoring protrusions (88) extending from the surface thereof and rotating in the direction of the paper travel and means for applying a crush-scoring force to the opposed side of the web of paper to crush score the paper,
with the steps of contacting the side of the web of paper (96) opposite the side in contact with the crush-scoring cylinder (68) with a plurality of cylindrical anvil rollers (12) disposed across the width of the crush-scoring cylinder and rotating by contact with the web of paper in the direction of paper travel, each anvil roller essentially contacting no more than one protrusion at any time and independently applying a preselected force against the web of paper (96) passing over a protrusion (88) and forming by the applied force of each of the plurality of anvil rollers (12) in cooperation with the protrusions (88) one or more diagonal crush-scores of substantially constant depth across the width of the web of paper.

16. A method for crush-scoring a web of paper as claimed in claim 15, wherein each cylindrical anvil roller being mounted to enable independent movement to or from the point of contact with the web of paper and dimensioned such that no more than one anvil roller is in contact with a crush-scoring protrusion at any time.

17. A method for crush-scoring a web of paper as claimed in claims 15 or 16 the preselected force is unidirectionally applied to each cylindrical anvil roller pressed against the web of paper, to form diagonal crush-scores of substantially constant depth.

18. A method as claimed in any of claims 15 to 17 in which independently applied for to each cylindrical anvil roller is a means of pneumatic pressure at a level sufficient to crush-score the web of paper to a predetermined depth, the pneumatic pressure being unidirectionally transmitted to each cylindrical anvil roller in the direction of said crush-scoring cylinder by a pressurized diaphragm acting on a plunger urged against a mounting bracket supporting said cylindrical anvil roller in free rotational movement.

## Patentansprüche

1. Vorrichtung zum Quetschen von Kerben in einer Papierbahn mit einem rotierbaren Quetschkerbzylinder (68), der eine Achse besitzt und einen oder mehrere Vorsprünge (88) aufweist, die sich von seiner Oberfläche (80) und quer über den Quetschkerbzylinder in einem Winkel erstrecken, der zur Achse des Quetschkerbzylinders diagonal verläuft; mit Mitteln, die auf eine Papierbahn (96), die zwischen diesen Mitteln und dem Quetschkerbzylinder hindurchgeführt wird, eine Kraft ausüben, mittels der die Papierbahn diagonal durch Quetschen eingekerbt wird; bei der die Vorrichtung als Mittel zur Anwendung einer Quetschkerbkraft auf die Papierbahn eine Mehrzahl von drehbaren zylindrischen Andruckrollenanordnungen (10) enthält, die über die Breite des Quetschkerbzylinders aneinandergrenzend angeordnet sind,
bei der jede Andruckrolle einzeln so ausgelegt ist, daß sie eine vorbestimmte, konstante Quetschkerbkraft auf eine Papierbahn ausübt, die über einen von der Oberfläche des Quetschkerbzylinders (68) sich erstreckenden Vorsprung geführt wird und welche Andruckrolle zu keiner Zeit mit mehr als im wesentlichen einem Vorsprung Kontakt hat; bei der der Quetschkerbzylinder durch Rotation und Zusammenwirken der rotierenden Andruckrollen (12) mit den Vorsprüngen bewirkt, daß eine im wesentliche konstante Kraft auf die Papierbahn über die Breite des Quetschkerbzylinders so ausgeübt wird, daß jede der durch Quetschen geformten Kerben eine im wesentlichen konstante Tiefe hat.

2. Vorrichtung nach Anspruch 1, bei der jede einer Mehrzahl von sich über die Breite des Quetschkerbzylinders erstreckenden, aneinandergrenzend positionierten Anordnungen mit zylindrischen Andruckrollen eine Andruckrolle (12) enthalten, die unabhängig und so ausgelegt ist, daß sie eine vorbestimmte konstante Quetschkerbkraft in Richtung der über den Quetschkerbzylinder sich bewegenden Papierbahn ausübt; bei der die zylindrischen Andruckrollen weiter so positioniert sind, daß eine zylindrische Andruckrolle mit Sicherheit zu keiner Zeit mit mehr als einem sich vom Quetschkerbzylinder (68) erstreckenden Vorsprung (88) in Kontakt kommt; bei der die zylindrischen Andruckrollen (12) mit den sich vom Quetschkerbzylinder erstreckenden Vorsprüngen (88) so zusammenwirken, daß eine Papierbahn durch Quetschen diagonal so eingekerbt wird, daß Kerben oder Rillen von im wesentlichen konstanter Tiefe gebildet werden, wenn die Papierbahn zwischen einen rotierenden Quetschkerbzylinder und einer Mehrzahl von rotierenden zylindrischen Andruckrollen hindurchgeführt wird.

3. Vorrichtung nach Anspruch 1 oder 2, bei der die Mehrzahl von aneinandergrenzend positionierten Andruckrollenanordnungen in sich seitlich überlappender Beziehung zueinander und zum Quetschkerbzylinder angeordnet sind.

4. Vorrichtung nach einem der Ansprüche 1 bis 3, bei der die zylindrischen Andruckrollen versetzt in aneinandergrenzender, überlappender Beziehung zueinander angeordnet sind.

5. Vorrichtung nach einem der Ansprüche 1 bis 4, bei der jedes der Quetschkerbmittel enthält
(a) eine zylindrische Andruckrolle (12),
(b) einen Halterungsbügel (18), der an einem Ende die zylindrische Andruckrolle drehbar aufnimmt,
(c) ein Paar an dem entgegengesetzten Ende des Halterungsbügels (18) angeordnete Führungsstangen (26 und 28), die parallel zueinander sind und sich in im wesentlichen gleicher Richtung in ein Lagergehäuse (32) erstrecken, das ein entsprechendes Paar von im wesentlichen reibungsfreien Lagern (48 und 50) zu einer solchen Aufnahme der beiden Führungsstangen aufweist, daß die Führungsstangen sich in das Lagergehäuse und daraus heraus im wesentlichen ohne Reibung bewegen können, und
(d) eine im wesentlichen reibungsfreie Stößelanordnung (56), die zwischen den Führungsstangen angeordnet ist und sich zwischen dem Halterungsbügel erstreckt, und Mittel im Lagergehäuse zur Anwendung einer vorbestimmten, unverzerrten Kraft über die im wesentlichen reibungsfreie Stößelanordnung (55) auf den Halterungsbügel und weiter über die Andruckrolle, auf eine Papierbahn, die von dem Quetschkerbzylinder durch einen Quetschvorgang mit Kerben oder Rillen versehen wird, und
(e) Mittel (36) zum Sichern der Vorrichtung an einer Halterung (34), die einem Quetschkerbzylinder zur Erzeugung von Kerben oder Rillen durch Quetschen in einer Papierbahn über die Ausübung einer Kraft von der Andruckrolle auf eine Papierbahn, wenn diese zwischen Andruckrolle und Quetschkerbzylinder hindurchgeführt wird, zugeordnet sind.

6. Vorrichtung nach Anspruch 5 mit einem Stößel (58), der zwischen den Führungsstangen angeordnet ist und sich zwischen dem Halterungsbügel erstreckt, und einer im Lagergehäuse enthaltenen flexiblen Membran (60), die in dem Quetschkerbzylinder eine erste Kammer zur Aufnahme des Stößels und eine zweite Kammer (62) zur Druckaufnahme definiert, und
Mitteln zur Bildung eines Gasdrucks in der zweiten Kammer, der eine auf die Membran wirkende Kraft erzeugt, welche Kraft auf den Stößel und weiter auf den Halterungsbügel wirkt.

7. Vorrichtung nach Anspruch 5 oder 6, bei der die im wesentlichen reibungsfreien Lager lineare Kugellager sind.

8. Vorrichtung nach einem der Ansprüche 1 bis 7, bei der die zylindrische Andruckrolle jeder sequentiell aneinandergrenzenden Andruckrollenanordnung wechselweise über und unter einer Ebene angeordnet ist, welche von der Achse des Quetschkerbzylinders und der Mitte des Stößels der Andruckrollenanordnung gebildet wird, und mit Mitteln, die so ausgelegt sind, daß sie zwischen dem Quetschkerbzylinder und einer durch Quetschung mit Kerben oder Rillen zu versehenden Papierbahn und der seriellen Andruckrollenanordnung positioniert sind und eine Quetschkraft auf die Vorsprünge des Quetschkerbzylinder nach Anwendung einer in eine Richtung wirkenden Kraft auf die Mehrzahl von zylindrischen Andruckrollenanordnungen erzeugen.

9. Vorrichtung zur Kerben- oder Rillenbildung in einer Papierbahn nach einem der Ansprüche 1 bis 8, bei der der Quetschkerbzylinder (80) von einem Paar Rollenlager (78) gehaltert wird, die eine zylindrische Achse bilden und eine Mehrzahl von halbkreisförmigen Vertiefungen einheitlicher Tiefe vorsehen, welche Vertiefungen sich quer über den Quetschkerbzylinder in einem Winkel erstrecken, der sich zur Achse des Quetschkerbzylinders diagonal verhält, wobei jede Vertiefung einen kreisförmigen Draht (88) mit im wesentlichen gleichförmigem Durchmesser enthält, der sich über die Vertiefung hinaus erstreckt und den Vorsprung bildet, der sich einheitlich von der Oberfläche des Quetschkerbzylinders erstreckt.

10. Vorrichtung nach einem der Ansprüche 5 bis 8, bei der das Lagergehäuse (36) mit den Sicherungsmitteln zum Sichern der Vorrichtung an einer Halterung über Mittel gekoppelt ist, die eine Parallelisierungsjustage der Andruckrolle gegenüber den Quetschkerbmitteln erlauben.

11. Vorrichtung nach einem der Ansprüche 5 bis 10, die Mittel zur Justierung der Position jeder der zylindrischen Andruckrollen gegenüber dem Quetschkerbzylinder bei nicht vorhandenem Gasdruck enthält.

12. Vorrichtung nach Anspruch 11, bei der die Mittel zur Positionsjustage jeder zylindrischen Andruckrolle enthalten:
(a) eine versteifende Verbindung zwischen den Führungsstangen,
(b) einen Block (70) mit abgeschrägter Oberfläche, der wahlweise entlang der versteifenden Verbindung bewegbar ist,
(c) Mittel (74) zur wahlweisen Positionierung des Blockes entlang der versteifenden Verbindung und
(d) Stiftmittel (72), die mit dem Lagergehäuse gekoppelt sind und mit der abgeschrägten Fläche des Blockes im Angriff sind, wobei die Position der zylindrischen Andruckrolle gegenüber dem Quetschkerbzylinder von der relativen Position der Stiftmittel entlang der abgeschrägten Fläche des Blockes bestimmt wird.

13. Vorrichtung nach Anspruch 9, bei der jeder Draht (88) unter Federspannung steht.

14. Vorrichtung nach einem der voraufgehenden Ansprüche, bei der die Vorsprünge (88) gegenüber der Achse des Quetschkerbzylinders (68) in einem Winkel von 45° angeordnet sind.

15. Verfahren zur Kerben- oder Rillenbildung durch Quetschen in einer Papierbahn (96) mit den Schritten des Führens einer mit Kerben oder Rillen zu versehenden Seite einer Papierbahn über eine Oberfläche eines Quetschkerbzylinders (68), so daß sie mit dieser Kontakt hat, welcher Zylinder einen oder mehrere Kerben oder Rillen quetschende Vorsprünge (88) aufweist, die sich von der Zylinderoberfläche erstrecken und in der Richtung des Papiertransportes drehen, sowie Mitteln zur Anwendung einer kerben- oder rillenbildenden Quetschkraft auf die entgegengesetzte Seite der durch Quetschen mit Kerben zu versehenden Papierbahn, mit den Schritten des Kontaktierens der Papierbahnseite (96), die der mit dem Quetschkerbzylinder (68) in Kontakt stehenden Seite gegenüberliegt, über eine Mehrzahl von zylindrischen Andruckrollen (12), die über die Breite des Quetschkerbzylinders angeordnet sind und im Kontakt mit der Papierbahn in Richtung des Papiertransportes rotieren, wobei jede Andruckrolle zu keiner Zeit mit im wesentlichen mehr als einem Vorsprung Kontakt hat und unabhängig eine vorbestimmte Kraft auf die über die Vorsprünge (88) geführte Papierbahn (96) ausübt und mittels der von jeder der Mehrzahl von Andruckrollen (12) ausgeübten Kraft im Zusammenwirken mit den Vorsprüngen (88) durch Quetschen eine oder mehrere diagonale Kerben oder Rillen von im wesentlichen konstanter Tiefe über die Breite der Papierbahn gebildet werden.

16. Verfahren zur Kerben- oder Rillenbildung durch Quetschen in einer Papierbahn nach Anspruch 15, bei dem jede zylindrische Andruckrolle so gehaltert ist, daß eine unabhängige Bewegung hin zum oder fort von dem Kontaktpunkt mit der Papierbahn möglich ist und jede zylindrische Andruckrolle so dimensioniert ist, daß zu keiner Zeit mehr als eine Andruckrolle mit einem kerben- oder rillenbildenden Vorsprung in Berührung ist.

17. Verfahren zur Kerben- oder Rillenbildung durch Quetschen in einer Papierbahn nach Anspruch 15 oder 16, bei dem die vorbestimmte Kraft in einer Richtung auf jede zylindrische Andruckrolle wirkt, die gegen die Papierbahn gedrückt wird, um durch Quetschen diagonale Kerben oder Rillen von im wesentlichen konstanter Tiefe zu bilden.

18. Verfahren nach einem der Ansprüche 15 bis 17, bei dem jeder zylindrischen Andruckrolle einzeln ein Mittel zugeordnet ist, das pneumatisch Druck von einer Größe erzeugt, der ausreicht, um die Papierbahn durch Quetschen mit Kerben oder Rillen vorbestimmter Tiefe zu versehen; bei dem der pneumatische Druck in einer Richtung auf jede zylindrische Andruckrolle über eine unter Druck gesetzte Membran in Richtung auf den Quetschkerbzylinder übertragen wird, wobei die Membran auf einen Kolben wirkt, der gegen einen Halterungsbügel gedrückt wird, welcher die zylindrische Andruckrolle zur freien rotierenden Bewegung haltert.

## Revendications

1. Appareil pour entailler par écrasement une bande de papier, lequel appareil comporte un cylindre (68) rotatif d'entaillage par écrasement, ayant un axe muni d'une ou de plusieurs saillies (88) s'étendant à partir de sa surface (80) et en travers du cylindre d'entaillage par écrasement en étant incliné diagonalement sur l'axe du cylindre d'entaillage par écrasement, et des moyens destinés à appliquer une force sur la bande de papier (96) qui passe entre ces moyens et le cylindre d'entaillage par écrasement pour entailler diagonalement par écrasement la bande de papier, caractérisé en ce qu'il comporte, en tant que moyens destinés à appliquer une force d'entaillage par écrasement sur la bande de papier, plusieurs ensembles (10) de rouleau formant enclume cylindrique pouvant tourner positionnés de manière adjacente sur la largeur dudit cylindre d'entaillage par écrasement, chaque, rouleau formant enclume étant adapté pour appliquer de manière indépendante une force constante présélectionnée d'entaillage par écrasement sur une bande de papier passant sur une saillie s'étendant a partir de la surface du cylindre (68) d'entaillage par écrasement et pour être en contact à tout moment essentiellement avec au plus une saillie, le cylindre d'entaillage par écrasement, par l'intermédiaire de sa mise en rotation et de la coopération des rouleaux (12) formant enclume rotative et des saillies, provoquant l'application sur la bande de papier d'une force sensiblement constante à travers la largeur du cylindre d'entaillage par écrasement de telle sorte que chaque entaille par écrasement formée ait une profondeur sensiblement constante.

2. Appareil selon la revendication 1 dans lequel chacun des plusieurs ensembles de rouleau formant enclume cylindrique positionnés de manière adjacente s'étendant à travers le cylindre d'entaillage par écrasement fournit un rouleau (12) formant enclume adapté pour appliquer de manière indépendante une force d'entaillage par écrasement constante présélectionnée en direction d'une bande de papier passant sur le cylindre d'entaillage par écrasement, lesdits rouleaux formant enclumes cylindriques étant en outre positionnés pour assurer qu'un rouleau formant enclume cylindrique vienne en contact à chaque instant avec au plus une saillie (88) s'étendant à partir du cylindre (68) d'entaillage par écrasement, lesdits rouleaux (12) formant enclumes cylindriques coopérant avec les saillies (88) s'étendant à partir du cylindre d'entaillage par écrasement pour entailler diagonalement par écrasement une bande de papier pour former des entailles de profondeur sensiblement constantes lorsque la bande de papier passe entre le cylindre rotatif d'entaillage par écrasement et plusieurs des rouleaux formant enclumes cylindriques rotatives.

3. Appareil selon la revendication 1 ou 2, dans lequel lesdits plusieurs ensembles de rouleaux formant enclumes positionnés de manière adjacente sont montés l'un à côté de l'autre et en se recouvrant l'un l'autre le long dudit cylindre d'entaillage par écrasement.

4. Appareil selon l'une quelconque des revendications 1 à 3, dans lequel les rouleaux formant enclumes cylindriques sont agencés en étant étagés avec recouvrement des parties adjacentes.

5. Appareil selon l'une quelconque des revendications 1 à 4, dans lequel chaque moyen d'entaillage par écrasement comporte :
(a) un rouleau (12) formant enclume cylindrique,
(b) un étrier (18) de montage recevant à une extrémité ledit rouleau formant enclume cylindrique de manière à ce que ce dernier puisse tourner par rapport audit étrier de montage,
(c) deux tiges de guidage (26, 28) fixées à l'extrémité opposée dudit étrier de montage (18), lesdites tiges de guidage étant parallèles l'une à l'autre et s'étendant sensiblement dans la même direction jusque dans un boîtier (32) de support comportant deux paliers (48, 50) correspondants sensiblement exempts de friction destinés à recevoir les deux tiges de guidage pour permettre aux tiges de guidage de ce déplacer sensiblement sans friction dans le support et à partir du support, et
(d) des moyens (55) formant piston sensiblement exempt de friction situés entre les tiges de guidage et s'étendant entre l'étrier de montage et les moyens contenus dans le boîtier de support pour appliquer une force prédéterminée et non soumise à une contrainte sur l'étrier de montage par l'intermédiaire des moyens (55) formant piston sensiblement exempt de friction, destinée à être appliquée par l'intermédiaire du rouleau formant enclume sur une bande de papier subissant un entaillage par écrasement par ledit cylindre d'entaillage par écrasement, et
(e) des moyens (36) pour fixer ledit appareil sur un support (34) associé au cylindre d'entaillage par écrasement destiné à réaliser une entaille par écrasement sur ladite bande de papier par application d'une force provenant dudit rouleau formant enclume sur une bande de papier qui passe entre ledit rouleau formant enclume et ledit cylindre d'entaillage par écrasement.

6. Appareil selon la revendication 5, caractérisé en ce qu'il comporte :
un piston (58) positionné entre les tiges de guidage et s'étendant entre l'étrier de montage et un diaphragme souple (60) reçu dans le boîtier de support, ledit diaphragme définissant dans le cylindre d'entaillage par écrasement une première chambre destinée à recevoir le piston et une seconde chambre (62) destinée à recevoir une pression, et
des moyens pour introduire un gaz sous pression dans la seconde chambre pour exercer une force contre le diaphragme, destinée à être appliquée sur le piston et ensuite sur l'étrier de montage.

7. Appareil selon la revendication 5 ou 6 dans lequel les paliers sensiblement exempts de friction sont des paliers linéaires à billes.

8. Appareil selon l'une quelconque des revendications 1 à 7 dans lequel le rouleau formant enclume cylindrique de chaque ensemble de rouleau formant enclume adjacent de manière séquentielle est alternativement positionné au-dessus et en-dessous d'un plan formé par l'axe du cylindre d'entaillage par écrasement et l'axe des pistons des ensembles de rouleau formant enclume, et des moyens sont adaptés pour être situés entre le cylindre d'entaillage par écrasement, une bande de papier à entailler par écrasement, et ladite série d'ensembles de rouleaux formant enclumes, et pour appliquer une force d'écrasement sur les saillies du cylindre d'entaillage par écrasement par application d'une force unidirectionnelle sur lesdits plusieurs ensembles de rouleaux formant enclumes cylindriques.

9. Appareil d'entaillage par écrasement d'une bande de papier selon l'une quelconque des revendications 1 à 8, dans lequel le cylindre (68) d'entaillage par écrasement est monté sur deux paliers à rouleaux (78) formant un axe de cylindre, et comporte plusieurs gorges semi-circulaires de profondeur uniforme s'étendant à travers le cylindre d'entaillage par écrasement en étant inclinées en diagonale sur l'axe du cylindre d'entaillage par écrasement, chaque gorge contenant un fil (88) circulaire de diamètre sensiblement uniforme s'étendant dans les gorges pour fournir la saillie s'étendant de manière uniforme à partir de la surface du cylindre d'entaillage par écrasement.

10. Appareil selon l'une quelconque des revendications 5 à 8, dans lequel ledit boîtier (36) de support est relié auxdits moyens de fixation dudit appareil sur un support à l'aide de moyens adaptés pour permettre un réglage du parallélisme dudit rouleau formant enclume avec lesdits moyens d'entaillage par écrasement.

11. Appareil selon l'une quelconque des revendications 5 à 10, qui comporte, en l'absence d'application de gaz sous pression, des moyens de réglage de la position de chacun des rouleaux formant enclume cylindrique par rapport au cylindre d'entaillage par écrasement.

12. Appareil selon la revendication 11 dans lequel les moyens de réglage de la position de chaque rouleau formant enclume cylindrique comportent :
(a) une barre (30) située entre les tiges de guidage,
(b) un bloc (70) ayant une surface inclinée qui est mobile de manière sélective le long de ladite barre,
(c) des moyens (74) pour positionner de manière sélective ledit bloc le long de ladite barre, et
(d) des moyens formant doigt (72) reliés audit support et en contact avec la surface inclinée de ladite barre, la position du rouleau formant enclume cylindrique par rapport au cylindre d'entaillage par écrasement étant déterminée par la position relative desdits moyens formant doigt le long de la surface inclinée de ladite barre.

13. Appareil selon la revendication 9 dans lequel chaque fil (88) est tendu élastiquement.

14. Appareil selon l'une quelconque des revendications précédentes dans lequel les saillies (88) font un angle de 45° avec l'axe du cylindre (68) d'entaillage par écrasement.

15. Procédé d'entaillage par écrasement d'une bande de papier (96), comportant les étapes consistant à faire passer un côté de la bande de papier à entailler par écrasement au contact d'une surface extérieure d'un cylindre (68) d'entaillage par écrasement ayant une ou plusieurs saillies (88) d'entaillage par écrasement d'une diagonale s'étendant à partir de la surface du cylindre et à le mettre en rotation dans la direction du trajet du papier, et comporte des moyens destinés à appliquer une force d'entaillage par écrasement sur le côté oppose de la bande de papier pour entailler avec écrasement le papier par l'intermédiaire des étapes consistant à mettre en contact le côté de la bande de papier (96) opposé au côté en contact avec le cylindre (68) d'entaillage par écrasement avec plusieurs rouleaux (12) formant enclumes cylindriques disposés selon la largeur du cylindre d'entaillage par écrasement et à les faire tourner dans la direction du trajet du papier à l'aide d'un contact avec la bande de papier, chaque rouleau formant enclume étant en contact à chaque instant pratiquement avec au plus une saillie, et à appliquer de manière indépendante une force présélectionnée contre la bande de papier (96) qui passe sur une saillie (88) et à former à l'aide de la force appliquée par chacun des plusieurs rouleaux (12) formant enclumes associés aux saillies (88) une ou plusieurs entailles par écrasement selon une diagonale, de profondeur à peu près constante le long de la largeur de la bande de papier.

16. Procédé d'entaillage par écrasement d'une bande de papier selon la revendication 15, dans lequel chaque rouleau formant enclume cylindrique est monté pour avoir un mouvement indépendant vers ou à partir du point de contact avec la bande de papier, et est dimensionné de manière telle qu'au plus un rouleau formant enclume est en contact à tout moment avec une saillie d'entaillage par écrasement.

17. Procédé d'entaillage par écrasement d'une bande de papier selon la revendication 15 ou 16, dans lequel la force présélectionnée est appliquée de manière unidirectionnelle sur chaque rouleau formant enclume cylindrique appuyé contre la bande de papier pour former des entailles par écrasement selon une diagonale, de profondeur à peu près constante.

18. Procédé selon l'une quelconque des revendications 15 à 17, dans lequel pour appliquer de manière indépendante chaque rouleau formant enclume cylindrique, il y a des moyens de mise sous pression pneumatique à un niveau suffisant pour entailler par écrasement la bande de papier sur une profondeur prédéterminée, la pression pneumatique étant transmise unidirectionnellement à chaque rouleau formant enclume cylindrique, dans la direction dudit cylindre d'entaillage par écrasement, à l'aide d'un diaphragme mis sous pression agissant sur un piston poussé contre un étrier de montage supportant ledit rouleau formant enclume cylindrique de manière à ce qu'il ait une mouvement libre en rotation.
